Europäisches Patentamt

**European Patent Office**

**Office européen des brevets**

(11) Publication number: **0 074 485**

**A2**

# EUROPEAN PATENT APPLICATION

(21) Application number: **82106940.8**

(51) Int. Cl.³: **G 06 K 7/10**

(22) Date of filing: **31.07.82**

(30) Priority: **14.09.81 IT 4164681**
**16.02.82 IT 4570582**

(43) Date of publication of application:
**23.03.83 Bulletin 83/12**

(84) Designated Contracting States:
**AT BE CH DE FR GB IT LI NL SE**

(71) Applicant: **Riaviz, Maria Grazia**
**Via Vallada, 9**
**I-33080 Porcia Pordenone(IT)**

(72) Inventor: **Riaviz, Maria Grazia**
**Via Vallada, 9**
**I-33080 Porcia Pordenone(IT)**

(74) Representative: **Da Riva, Ermanno**
**AGENZIA BREVETTI "PORDENONE" Viale Grigoletti, 22**
**I-33170 Pordenone(IT)**

(54) **Improvement in the optical wand scanner.**

(57) Improved optical wand scanner for the bar code reading, particularly for the data collecting in several applications in the shops and warehouses, by the bar code reading or the optical characters recognizing (OCR). According to this invention, the optical wand scanner is an autonomous wand scanner which isn't connected to any other appliance and comprises means for the reading, codifying and controlling of the data represented by bar codes or OCR, storage means for the inputted data, means for the connection to a processor for transferring the stored data into it, control means, means for the autonomous voltage supply, data manual inputting means and display means for the manually inputted data.

Fig. 2

## Improvements in the optical wand scanner for the bar code reading

The invention relates to an optical wand scanner of improved type, particularly suitable for collecting data for several uses, in the shops and warehouses, by means of either the bar code reading or the optical characters recognizing (OCR).

The optical wand scanners which are now used are substantially of two types only, which respectively are working in the two following ways:

- a)  in fixed positions, where the optical wand scanner(s) are connected to terminal ends through a cable. When the optical wand scanner is utilized in this way, i.e. in the more typical and frequent case constituted by the supermarket cashes, the operator thereof works in a sitting position and the labels to be read flow from and towards him. Pratically, the operator (which is normally a cashier) by means of the optical wand scanner reads the code from each packing and on the terminal connected thereto by means of a local processor obtains: the description, price, discounts etc. concerning the sold wares.

- b)  in positions which may be defined mobile positions, as the optical wand scanner is associated to a portable microprocessor of per se known type and used for the data collecting with manual input. This second utilization type is much less diffused than the first one and requires that the labels with the code to be optically read are applied in the effective zone where the wares are lying. Normally, the microprocessors of this type, which are expressly designed for the data manual input, comprise:

- a great and handy keyboard,
- a memory with a large storage capacity for storing such data and for the relevant control program,
- a data and/or controls display,
- output elements for discharging the inputted data (generally to a telephonic line through an acoustic coupler),
- a rechargeable piles autonomous voltage supply,
- optionally, sometimes it is foreseen the possibility to connect an optical wand scanner by means of a cable.

Normally, such microprocessors are relatively encumbering (typical size is about: cm. 22 x 12 x 8 and the weight is about 600/800 grammes) and it is indispensable that the operator works with both hands, the one for holding the microprocessor and the other one for operating the keyboard or, alternatively, the optical wand scanner. This working manner relates to the same purposes for which the microprocessor has been designed, that is the utilization by persons which sole purpose is the data input into the microprocessor.

Assuming on the contrary that an optical wand scanner system as just described is to be utilized by the shopmen or by other operators, whose main purpose isn't the data collection but for instance taking the ware from the schelves, bringing it on the bench, to do sums etc.it is essential that such persons have the hands free and are not impeded by complicated structures, such as the optical wand scanner connected to the portable microprocessor just described.

On the other hand such operators may require at intervals to collect data in a simply, rapidly and certainly way, just as it may be permitted by an optical wand scanner. Therefore it might be appropriate to have available a "really portable and personal" optical wand scanner, which like a fountain pen may be introduced in the small pocket and extracted from it only when it is required. Namely, the data collecting system should be adapted to the user person without causing to him any encumbrance. Therefore, the user shouldn't notice at all to have such a data collecting system more than how he notice to have a fountain pen, that is his hands must remain both free and only when required he must be able to extract the optical wand scanner, for short time and with a hand only. as well as to utilize and put it back.

Such aims of praticality, lightness and economicity are adequately attained by the improvements on which this invention is based.

To this purpose a portable optical wand scanner (and not a microprocessor with keyboard) has been expressly designed. which is able to operating in an autonomous manner (namely without the need to be connected to something) and which structure comprises: a very small memory, the logic system for reading and discharging and the autonomous voltage supply.

Obviously, the data stored in the optical wand scanner must be periodically discharged towards means which are able to elaborate them and for this aim the portable optical wand scanner as conceived by this invention may be directly discharged into the computers today most utilized in commerce (micro and minicomputers; etc.), provided that they utilize standard interfacing systems, the relevant control programme and suitable connectors.

It is proper to maintain that said an optical wand scanner permits to extend to the optical wand scanners the revolution which has been produced by the fountain pens with respect to the pens with the ink-stand. Also in that fact, indeed, the old system was suitable for sedentary and/or full time operators, while the new one was suitable to moving operators, which were requiring to be free and to use the pen sometimes. Like the fountain pen which sometimes requires to be filled in with ink, the considered optical wand scanner must be sometimes disharged of the data stored in it. However, it is completely autonomous for a very long time, similarly to the fountain pen.

The present optical wand scanner is also indipendent from the utilized standard bar code system, as it may be provided with different reading programs (proper to that particular standard system). It is evident that with this system one may also achieve to have an optical wand scanner which is able to read the O.C.R. codes.

Hence, resuming, it may be said that as far as the mentioned uses are concerned, that is shops and warehouses which wares are provided either with optical bar labels, or with O.C.R., which may be taken by means of the shopmen which must have both hands free, the system referred to in the present application represents a considerable technical improvement, as it permits to employ the optical reading system in some utilization fields which were till now impossible or anyhow difficult and discourageable to be performed, by simplifying in this way the operations to be completed and reducing the relevant times in a considerable manner.

There are now described some possible examples of application:

- When the shopman which is retracting a product or more products from the shelves, notices that any product stored on hand is under a minimal level and them must be reodered, he reads with his optical wand scanner the label referred to. In this way, the code is tranferred into the memory of the same optical wand scanner and the shopman may pursue his work. Similarly, the amount may be read by deducing it from a list provided with 10 decimal numbers which are bar-coded. After a determined time period, for instance at the day end, the data stored in the several optical wand scanners are discharged in a microcomputer which collects, controls (for instance by eliminating the possibility of double reorders) and then transfers such a data to a remote computer, generally near the ware storage, through a telephonic line, in order that the reordered ware may be adequately sent and reckoned.

- A client arrives at the bench and orders a certain number of products. The shopman take them from the shelves and progressively reads with the optical wand scanner also the relevant code and amount thereof. When the products have been collected, the shopman returns to the bench with the same and the relevant codes thereof which have been stored into the optical wand scanner. Afterwards, he connects the latter to a local processor and depending on the necessities and the available informations may obtain: account, invoice, fiscal receipt, note. etc.

Moreover the processor may utilize the data for an automatic warehouse administration, for effecting statistics on the sales and so on.

These and other features of the invention will be better unterstood in the following description, on a merely exemplifying and non-limiting title and with reference to the annexed figures in which:

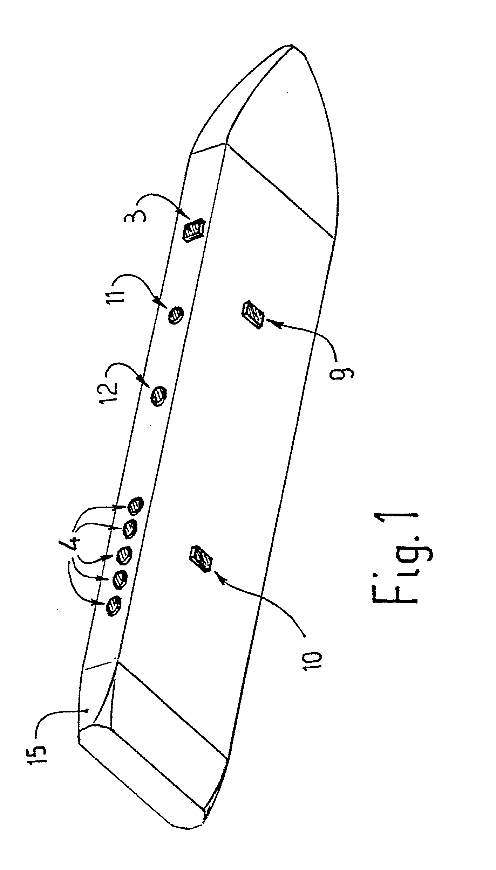

Fig. 1 shows the improved optical wand scanner according to the invention, in a perspective view;

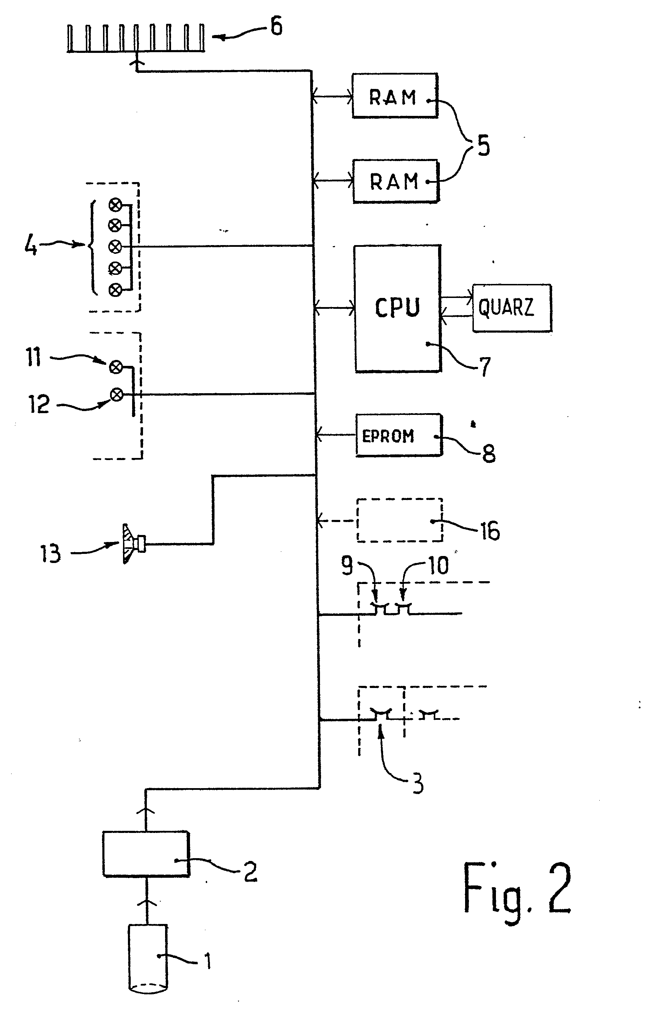

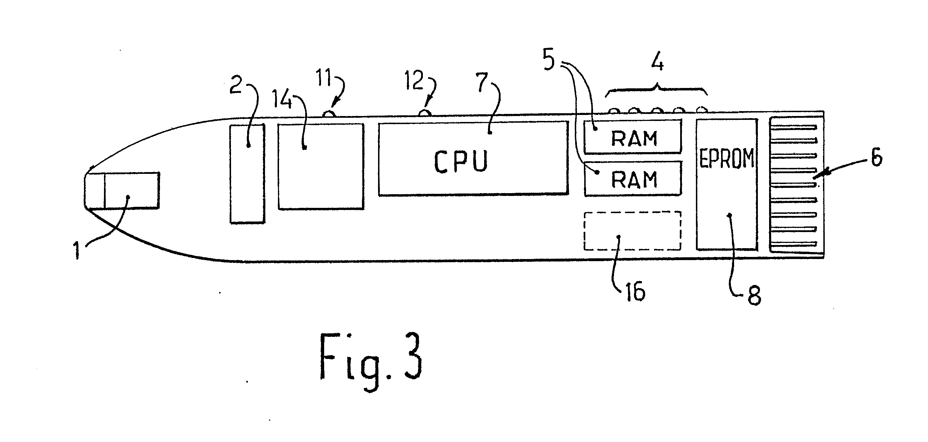

Fig. 2 shows a block diagram thereof;

Fig. 3 shows, in a simplified cross-section, the main components of the wand scanner of Fig. 1.

The same elements have been provided in the figures with the same numeral references.

Here is described the improved optical wand scanner accor ding to the present invention, by examining in detail its parts:

a) <u>Means for reading, codifying and controlling the data</u> <u>represented by means of the bar code or OCR</u>

An optical head 1 similar to that one produced by Hewlett-Packard and called HEDS-1000, is utilized for the reading. Such a head, obviously known in the literature, comprises a light – emitting photodiode, a phototransistor sensitives to the luminous intensity changes and a focusing lens. It is applied in the fore part of the optical wand scanner and suitably spaced apart from the end limit thereof. When the wand scanner is slided at a suitable speed and inclination on a bar coded label, the light emitted by the photodiode hits the label and is reflected in a different manner by the white or black vertical bars. These changes are intercepted by the phototransistor, which converts them into two different levels of electric signal. Downstream of the optical head is connected an amplification threshold circuit 2, which amplifies the high-level signal corresponding to the black bars and eliminates the low-level signal relative to the white bars. Afterwards, the signal interpretation and transcoding is depending on the used bar codifying system. At the present time this task is developed by the control program. In this way the optical wand scanner is phisically independent from the used bar codifying system. The change which only occurs is solely in the control program, which on the contrary may logically foresee also the reading in a time of more codifications, the size of the relevant memory being the solely limit thereto.

There is effected the description, by way of **example**, of the codifying system which is used at the present time.

Datum lenght, from 1 to 16 characters.

4 bit codified characters in binary code (there are possi ble 16 characters, the digital ones plus the letters A,B, C,D,E,F).

To each datum are associated three service characters: synchronism. lenght and control character.

The black bars width may be of two type. the one being the double of the other one, but with a non fixed size.

        The width   1   represents   0

        The width   2   represents   1

The white bars act as separating bars only.

As far as the control of the read code is concerned, the same is effected by utilizing a suitable mathematical formula (which is beyond the subject of this invention, but is normal for a skilled person) for the datum characters and by obtaining a result which is then compared with the check digit.

When these data compared each other are equal, the read datum is admitted and is started the acoustic signal.

For the sake of brevity there isn't now described the OCR reading principle, to which it is referred to only to explain that the principle of portability of the wand scanner may also be applied to the readers of this kind.

b) <u>Data manual input means and relevant display</u>

This unit has been especially designed depending on its portability and practicality, therefore considering its very small size and weight. Due to this reason, it has been intentionally renounced to use the handy decimal manual keyboard, which has represented one of the main
encumbering causes of the modern data collecting microprocessors. Therefore, the wand scanner according to this
invention is a means which is particularly specialized to
input data by an optical way. Nevertheless,in some cases
it may be more suitable to effect a manual input by means
of some keys, of the data logically connected with the
following optical reading.

There are two types thereof foresee at the present time:
1) a key 3 and five luminous indicators 4. The key, which
is operated by subsequent or continuous pressure, allows
the input of a number comprises from 1 to 5, which is then
visualized by a corresponding number of luminous indicators
2) Two keys, a two-digit display (alternative system which
hasn't been represented).
The keys, which are operated by subsequent or continuous
pressure, allow the input of two numbers comprise from 0
to 9. In this case it is requested an integrated circuit
(16) for the display control.

In both cases the numbers are obtained from the program
by adding a unit at a time in a proper memory register. At
the moment of the subsequent optical reading, the register  content is transferred into the data memory together
with the datum obtained by the optical way. This operation
causes the register to be cleared and resets the outer
indicators.

c) Input data storage means
The data which have been inputted into the portable unit,
by optical and manual way, are stored sequentially in a
RAM – memory 5.
At the present time the RAM memory of the unit foresees a storage capacity of 1024 bytes (a byte = 8 - bits - character) and is constituted by two chips of 512 bytes.
Such a memory may however be also utilized for 8 K ( 8 x
1024 bytes).

d) Means for phisically connecting of a portable unit to
   a processor and for transferring the stored data
This system is designed for periodically transferring
the stored data to the outer processors.  This is done
by introducing the end part of the optical wand scanner,
in which a comb connector  6  is foresee and is normally protected by an extractable cover  15  in a plastic
material,  into a spring receptacle connected to the
processor.  When this  mechanical connection  has been
done,  the processor starts the data transferring which
is controlled by the optical wand scanner and the processor control programs.  The  connection system  at
present time  is a parallel interface of the Centronics -
type.
If the processor is provided with serial gates only,
it is possible to connect an outer appliance for the
parallel-serial transforming downstream of the receptacle.
Normally, the processor control program foresees the control of the received data and gives a message indicating
correct or not correct transmission, with one or more
totals, depending on the members of gates and simultaneous transmissions. At the present time, the connected
processor  foresees until  5  simultaneously transmissions.
When each transmission which has been effected in a satisfactory manner is ended, the data memory is cleared, this
operation being not permitted on the contrary in case of
wrong or incomplete transmission.

e) <u>Means for surveying and controlling the several functions.</u>

The control functions are performed by a microprocessor 7 and the control program of an EPROM-memory 8.

In this case a MC 6805 microprocessor of Motorola Co. is utilized, which is realized on a single chip provided with 40 pins and can provide up to 8 K memory addresses. A 1 K bytes EPROM - memory is utilized, which is situated on a single chip provided with 28 pins.

At the present state of the art there are already existing EPROM chips of the same size and having a 2 K bytes of capacity and it is deemed that in a next future they may be produced from a 4 K bytes of capacity.

- Control program -

the control program controls almost all the unit functions and particularly:

- the reading and codifyng of the read data;
- the controlling of the read data through the check digit;
- the data transferring into the RAM - memory;
- the data transferring from the RAM - memory to the optical wand scanner outside (with a interface protocol);
- the RAM - memory clearing when the transmission has been correctly ended;
- the erasing of the last introduced datum and controlling of the relevant signaling;
- the optical wand scanner self-testing and controlling of the signaling thereof;
- the full-stored memory controlling and controlling of the signaling thereof;
- the generating and transferring of the manual imputed data into the RAM-memory, etc.

It has already been said that when the EPROM - memory is
substituted by a similar memory, but provided with another
program (or simply by substituting the program), it is
possible to read and understand the coding systems provided with different bars. When the EPROM - memory is designed for a storage capacity of 2 K or 4 K bytes, it is
possible to utilize a program which may recognize a lot
of coding systems (or, alternatively, of the OCR charac
ters by utilizing the same system).


f) Unit manual control means

The portable unit is operated by means of recessed spring
keys having a short·working path, which are:

- a key 9 for the working control of the optical
  wand scanner; it permits the optical wand scanner
  electrical circuit to be eletrically supplied, pre
  disposing so the whole unit to work;
- a key 3 for the manual data input (see paragraph
  b);
- the unit self-testing control, which is situated
  in an inner position difficult to be reached, as
  it clears the data memory, is operated by connecting two positions by a screwdriver. This control
  starts the unit self testing and signals the trou
  bles which eventually may occur;
- a key 10 for erasing the last inputted datum: it
  attends to erase the last read datum from the memory as well as the manual datum eventually
  inputted subsequently.


g) Unit state outside signaling means

- For a datum read with a correct control: an acoustical signal;

- For the wand scanner working after having applied a pressure on the start key: optical signaling 11;

- For the full-stored memory; optical signaling 12 and acoustical signaling 13 which is intermittently prolonged;

- For the erasing which has already been done, the last datum having being inputted: acoustical signaling;

- For the self-testing OK (positive self-testing): optical and acoustical segnaling;

- For a manually inputted datum: optical signaling with luminous indicators 4 or display;

- For the discharged pile: the operating luminous indicator 11 lacks to ignite after having depressed the operating control key 9.


Unit voltage feeding means

The voltage feeding is obtained by means of a rechargeable Nickel-Cadmium cell 14.

For each introduction of the wand scanner into the receptacle for transferring the data on the connected processor, the wand scanner foresees a contemporary cell recharge. This function has already been foreseen on the present processor. This means in practice that the relevant optical wand scanners have an unlimited endurance and it will be never necessary to effect a separate cell recharge. In any case it is provided the possibility of detecting and signaling the discharged cell state and re charging the same cell through a separate recharging operation, in the case in which the processor does not provide itself to attend to this function.


Further miniaturizing

It is possible to have a further miniaturizing of the electronic circuits by utilizing thin film hybrid or LSI custom technologies, which are well known on the microelectronics field.

The technology to be selected depends on technical and economical factors. In any case it can be said that the result of this will be an optical wand scanner, which has been improved according to the present invention and is provided with size which are compatible with that ones of any traditional writing pen.

Obviously any suitable modifications within the capability of a skilled person may be effected to this preferential solution without departing from the protection field of the present invention.

CLAIMS

1. Improved optical wand scanner for reading of the bar code, characterized in which it comprises: means for reading, codifying and controlling data represented by means of the bar code and/or OCR, means for storing the inputted data, means for conncting to a processor in order to trasnfer the stored data to it, control means and autonomous voltage feeding means.

2. Optical wand scanner according to claim 1, characteri zed in that the means for data reading, codifying and controlling comprise:
- an optical head constituted by a photodiode, a phototransistor and a focusing lens;
- an amplification threshold circuit;
- an EPROM memory and a microprocessor which codify the characters received from the amplification circuit and control the correctly effected readings.

3. Optical wand scanner according to claim 1, characteri zed in that the data storage means are constituted by a RAM memory realized by a C MOS technology and in the form of one or more integrated circuits.

4. Optical wand scanner according to claim 1, characteri zed in that the means for the mechanically connection of the wand scanner to the processor are constituted by a comb connector, a spring receptacle connected to the pro cessor and a plastica cover for protecting the comb connector.

5. Optical wand scanner according to claim 1, characteri zed in that it comprises a microprocessor and an EPROM memory, both realized in the form of integrated circuits, for controlling the whole unit working.

6. Optical wand scanner according to claim 1, characterized in that their manual control means are constituted by spring keys having a short working path.

7. Optical wand scanner according to claim 1, characterized in that the means for the unit operating state outside signaling are constituted by an acoustical signal emitter for alternatively indicating:
- the correct reading,
- the full-stored memory,
- the erasing of the last introduced datum,
and by luminous indicators for respectively indicating:
- the wand scanner operation (after having depressed the key),
- the erasing of the last introduced datum.

8. Optical wand scanner according to claim 1, characterized in that their autonomous voltage supply means are constituted by a rechargeable Nickel-Cadmium cell or equivalent, which is automatically rechargeable when the data are transferred into the processor.

9. Optical wand scanner according to claim 1, characterized in that it comprises means for data manual input and visualizing, constituted by a spring key having a short working path and by five luminous indicators (LED).

10. Optical wand scanner according to claim 1, characterized in that the data manual input and visualizing means are constituted by two spring keys having a short working path, a liquid cristals display or equivalent, for displaying two digits in correspondance of the keys, and an integrated circuit for the display control.

11. Optical wand scanner according to claim 1, characteri ·
zed in that a plurality of electronic circuits may be
realized with thin film hybrid or LSI custom technologies,
so as to further reduce the size of the wand scanner
permitting them to be comparable with that ones of any
traditional writting pen.

Fig. 1

Fig. 2

Fig.3